# EUROPEAN PATENT APPLICATION

(11) **EP 2 525 345 A1**
(43) Date of publication of application: **21.11.2012**
(21) Application number: 11747437.9
(22) Date of filing: 24.02.2011
(51) Int. Cl.: G09G 3/20, G09G 5/00, H04N 5/225

(54) **VIDEO DISPLAY DEVICE**

(30) Priority: 26.02.2010 JP 2010041337
(71) Applicant: Sharp Kabushiki Kaisha, Osaka-shi, Osaka 545-8522 (JP); Research Organization Of Information And Systems, Tachikawa-shi, Tokyo 190-8562 (JP)
(72) Inventor: GOHSHI, Seiichi, Osaka-shi, Osaka 545-8522 (JP); ECHIZEN, Isao, Chiyoda-ku, Tokyo 101-8430 (JP)
(74) Representative: Goddar, Heinz J.
(86) International application number: PCT/JP2011/054116
(87) International publication number: WO 2011/105477

(57) **Abstract**

Provided is a video image display device that emits light for a purpose other than a video image display purpose, together with display images, from a video image display section such as a screen, so as to degrade image quality of illegally camcorded video images, thereby making it impossible to use the illegally camcorded image contents. A video image display system 1 includes a projector (202) that generates a display image based on digital video image signals; and a screen (203) on which the image generated by the projector (202) is projected and displayed. On a backside of the screen (203), there is provided an infrared ray emitting unit (204) that emits infrared light (light for a purpose other than a video image display purpose) from a video image display surface during a period while video images are being displayed on the screen (203). Alight amount of the infrared light varies with time. It varies at a time interval equal to or less than a time constant of auto-iris control of a content recording device (130).

## Description

### Technical Field

The present invention relates to a video display image technology for preventing an action of illegally camcording an image content displayed on a screen or an image display panel, such as a movie, with an image recording device such as a video camera.

### Background Art

Recently, digital image display devices and image pickup devices such as digital cameras have been spread, and the image quality of the same has been improved, which has made it possible to watch contents having high image quality at low costs. On the other hand, however, actions of picking up contents such as images and moving images displayed on screens or displays with image pickup devices such as digital video cameras and illegally distributing the contents thus obtained have been seen as problematic. The distribution of such pirated DVDs thus illegally obtained is against the protection of copy rights, and causes significant economic losses, and hence, countermeasures against the same have been urgently needed.

As a countermeasure against this problem, JP2010-20263A discloses a technique of forcibly making a video camera unfocused, by using a phenomenon that the automatic focusing mechanism of the video camera gets out of order when an optical system of the video camera receives intensive infrared light. According to this conventional technique, video images illegally camcorded are recorded as defocused, low-quality video images in a recording medium of the video camera (such as a video tape or a hard disk). Thus, this makes it possible to prevent contents from being illegally distributed.

However, with the conventional technique disclosed in the aforementioned publication, an illegal camcording attempt by manual focus adjustment with the automatic focusing mechanism of a video camera used for illegal camcording being turned off cannot be prevented effectively.

Further, the above-mentioned publication discloses that infrared light, blinked at intervals of about 1 to 3 seconds, is projected from an anti-camcording apparatus toward the observers' side, so as to make a video camera used for illegal camcording out of focus, and at the same time, to cause its exposure control to deteriorate. However, like the above-described case, it is impossible to sufficiently degrade the quality of camcorded video images, in the case where the illegal camcording is carried out with the automatic focusing mechanism being turned off.

### Disclosure of the Invention

The present invention provides means that emits light for a purpose other than video image display, together with light for display images, so that the light works on an auto-iris mechanism of a camera, thereby to degrade image quality of video images that are illegally camcorded, and to make the use of illegally camcorded image contents impossible.

For the above-described object, a video image display device of the present invention includes a light emission part that emits light for a purpose other than a video image display purpose from a surface of a video image display section, and a light emission control part that controls the light emission part so that a light emission intensity of the light for a purpose other than the video image display purpose varies during a period while video images are being displayed on the video image display section.

With the present invention, it is possible to degrade quality of illegally camcorded image contents, thereby making the image contents useless, and consequently to prevent unauthorized distribution of illegally camcorded image contents.

### Brief Description of Drawings

[FIG. 1] FIG. 1 is a block diagram showing a functional configuration of a video image display system according to one embodiment of the present invention.
[FIG. 2] FIG. 2 is a schematic view showing a schematic configuration of a video image display system according to one embodiment of the present invention.
[FIG. 3] FIG. 3 is a schematic view showing the positional relationship between an observer and a screen as well as an infrared ray emitting unit in the video image display system of the present embodiment.
[FIG. 4] FIG. 4 is a block diagram showing a schematic configuration of a signal generation part in an anti-camcording signal output section 120 in a video image display system 1 of the present embodiment.
[FIG. 5] FIG. 5 is a block diagram showing a schematic configuration of an iris mechanism in a content recording device 130 of the present embodiment.
[FIG. 6A] FIG. 6A is a flowchart showing an exemplary processing flow at a content display section 110 shown in FIG. 1.
[FIG. 6B] FIG. 6B is a flowchart showing an exemplary processing flow at an anti-camcording signal output section 120 shown in FIG. 1.
[FIG. 7] FIG. 7 is an exemplary variation of intensity of infrared light emitted from the anti-camcording signal output section in the video image display system of the present embodiment.
[FIG. 8] FIG. 8 is an exemplary variation of intensity of infrared light emitted from the anti-camcording signal output section in the video image display system of the present embodiment.
[FIG. 9] FIG. 9 is an exemplary variation of intensity of infrared light emitted from the anti-camcording signal output section in the video image display system of the present embodiment.
[FIG. 10] FIG. 10 is an exemplary variation of intensity of infrared light emitted from the anti-camcording signal output section in the video image display system of the present embodiment.
[FIG. 11] FIG. 11 is an exemplary variation of intensity of infrared light emitted from the anti-camcording signal output section in the video image display system of the present embodiment.
[FIG. 12] FIG. 12 is an exemplary variation of intensity of infrared light emitted from the anti-camcording signal output section in the video image display system of the present embodiment.
[FIG. 13] FIG. 13 is an exemplary variation of intensity of infrared light emitted from the anti-camcording signal output section in the video image display system of the present embodiment.
[FIG. 14] FIG. 14 is an exemplary variation of intensity of infrared light emitted from the anti-camcording signal output section in the video image display system of the present embodiment.
[FIG. 15] FIG. 15 is an exemplary variation of intensity of infrared light emitted from the anti-camcording signal output section in the video image display system of the present embodiment.

### Embodiments for Carrying Out the Invention

In order to solve the above-described problems, a video image display device disclosed herein includes: an image formation section that generates a display image; and a video image display section on which the image generated by the image formation section is displayed. This video image display device further includes: a light emission part that emits light for a purpose other than a video image display purpose from a surface thereof on a side to the video image display section; and a light emission control part that controls the light emission part so that a light emission intensity of the light for the purpose other than the video image display purpose varies during a period while video images are being displayed on the video image display section.

The video image display device displays video images in the following manner, for example: an image formation section such as a projector that forms an image based on, for example, digital video image signals, and the formed image is projected onto a video image display section such as a screen. Alternatively, the video image display device may be, for example, a light-emitting-type display device such as a plasma display or an organic EL, or a non-light-emitting-type display device such as a liquid crystal display device. In the video image display device, a light emission part is provided that emits light for a purpose other than a video image display purpose from a surface of the video image display section during a period while video images are being displayed on the video image display section.

Here, the light for a purpose other than the video image display purpose is light that is not contained in light in a wavelength band that is recognized by eyes of humans (i.e., the wavelength band of 380 nm to 780 nm), and more specifically, it is infrared light and ultraviolet light. Such light for a purpose other than the video image display purpose is hard for human eyes to recognize, but can be detected by a content recording device provided with CCD or CMOS image sensors (specifically, for example, a video camera), in the same manner as that for visible light.

The above-described configuration makes it possible to project light for a purpose other than a video image display purpose from the video image display surface during a period while video images are being displayed on the video image display section, the light being not recognized by human eyes but being detected by a video camera, and having a light emission intensity that varies. Further, the light emission control part controls the light emission part so that the light emission intensity of light for the purpose other than the video image display purpose varies during a period while video images are being displayed on the video image display section, and this causes illegally camcorded image contents to become video images that are brightened or darkened irrespective of original video images, thereby becoming very hard to watch. It should be noted that since the light emitted from the light emission part is infrared light or ultraviolet light, the light is hard for human eyes to recognize, and therefore, to human eyes, it is seen as if substantially only original video images are displayed on the video image display section.

Thus, with the video image display device having the above-described configuration, it is possible to degrade the display quality of illegally camcorded video images, without degrading the display quality of video images displayed on the video image display section. Therefore, it is possible to make illegally camcorded image contents useless, and consequently to prevent unauthorized distribution of illegally camcorded image contents.

In the video image display device having the above-described configuration, preferably, owing to the control by the light emission control part, during the period while video images are being displayed on the video image display section, there are two or more light emission intensity variation periods in which the light emission intensity of the light emission part weakly increases or strongly increases, and the two or more light emission intensity variation periods are continuous to each other.

Further, the two or more light emission intensity variation periods, which are continuous to each other, preferably include a period having a length equal to or more than a time constant of auto-iris control of a camera, and a period having a length equal to or less than the time constant. With this configuration, an abrupt change that auto-iris control cannot follow can be caused to occur in the light emission intensity after slow variation of the light emission intensity that the auto-iris control can follow, which causes an iris of a camera to assume an inappropriately open iris state. This causes a time region in which images having quality worth for illegal camcording remain and a time region in which there are images of degraded quality are adjacent, thereby making illegally camcorded video images very hard to watch.

It should be noted that the light emission intensity variation periods in which the light emission intensity weakly increases or strongly increases preferably have a length of about 30 milliseconds or more and 3.0 seconds or less each. In this case, effective works on the auto-iris control can be achieved.

The above-described video image display device preferably further includes an image analysis part that analyzes brightness of a video image displayed on the video image display section, wherein the light emission control part controls the light emission part based on the brightness of the video image analyzed by the image analysis part so that a maximum light emission intensity of the light emission part per unit area is greater than brightness of the video image per unit area. Further, the light emission control part more preferably controls the light emission part so that the maximum light emission intensity of the light emission part per unit area is equal to or more than three times the brightness of the video image per unit area.

With the above-described configuration, the maximum light emission intensity can be varied according to the brightness of video images displayed, whereby illegally camcorded video images can be degraded more effectively.

In the above-described video image display device, the light emission control part preferably controls the light emission part so that the light emission intensity linearly varies during at least a part of a period while the light emission intensity of the light emission part varies from a minimum value to a maximum value and a period while the light emission intensity varies from the maximum value to the minimum value.

With the above-described configuration, the light emission control part can be formed with a simple digital circuit.

In the above-described video image display device, the light emission control part preferably controls the light emission part so that the light emission intensity non-linearly varies during at least a part of a period while the light emission intensity of the light emission part varies from a minimum value to a maximum value and a period while the light emission intensity varies from the maximum value to the minimum value.

The above-described configuration makes the following by the auto-iris control difficult at all the times, thereby causing an inappropriately open iris state to be maintained. Therefore, illegally camcorded video images can be degraded more effectively.

In the above-described video image display device, the light emission control part preferably controls the light emission part so that during a period while video images are displayed on the video image display section, a period while the light emission intensity of the light emission part does not vary is present, and the period has a length equal to or more than a time constant of auto-iris control of a camera.

The above-described configuration allows an appropriately open iris state to be maintained for a certain set period, and hence, illegally camcorded video images are seen as normal video images for certain set periods of time. With this, illegally camcorded video images are still made hard for humans to see.

Further, this causes cyclic luminance variation to be superposed on illegally camcorded video images, and therefore, this causes flicker elements to be given thereto. This is particularly effective for prevention of illegal camcording of still images in which the brightness of video images does not vary

In the above-described configuration, a sum of lengths of the light emission intensity variation periods in which the light emission intensity weakly increases or strongly increases may be equal to or less than a time constant of auto-iris control of a camera.

Further, preferably, a sum of lengths of the light emission intensity variation periods in which the light emission intensity weakly increases or strongly increases is 30 milliseconds or more, and 3.0 seconds or less.

With the above-described configuration, occurrence of an abrupt change in the light emission intensity that auto-iris control cannot follow causes an iris of a camera to assume an inappropriately open iris state. It should be noted that an iris mechanism control section determines an average of brightness during a certain set period, and performs an operation of opening/closing the iris according to the average of brightness. Therefore, if the change in the light emission intensity is smaller than a time constant of the auto-iris control, the auto-iris control cannot follow the change, which results in that the brightness of illegally camcorded images gets out or order.

In the above-described video image display device, the light for the purpose other than the video image display purpose may be infrared light.

### Embodiment

The following description explains a detailed embodiment.

Inventors of the present invention focused attention on that, whereas light other than visible light, such as infrared rays or ultraviolet rays, is not recognized visually by humans, wavelengths of infrared rays, ultraviolet rays, etc. are detected by CCD and CMOS image sensors as image pickup elements of digital cameras and digital video cameras used in illegal camcording, due to instability of elements themselves. Then, the inventors came up with an idea that when video images are being displayed on a screen in a movie theater or the like, light having a waveform difficult for humans to recognize could be emitted as anti-camcording signals at the same time, from the image display screen, so that the signals work on an auto-iris mechanism of a camera so as to make the iris in an inappropriate open state. This causes illegally camcorded image contents to become video images that are turned brighter or darker, irrelevant to original video images. In other words, the present invention makes it possible to degrade quality of image contents captured by a video camera. This makes reproduction and watching of illegally camcorded video images difficult, thereby consequently preventing unauthorized distribution of illegally camcorded image contents.

### Embodiment 1

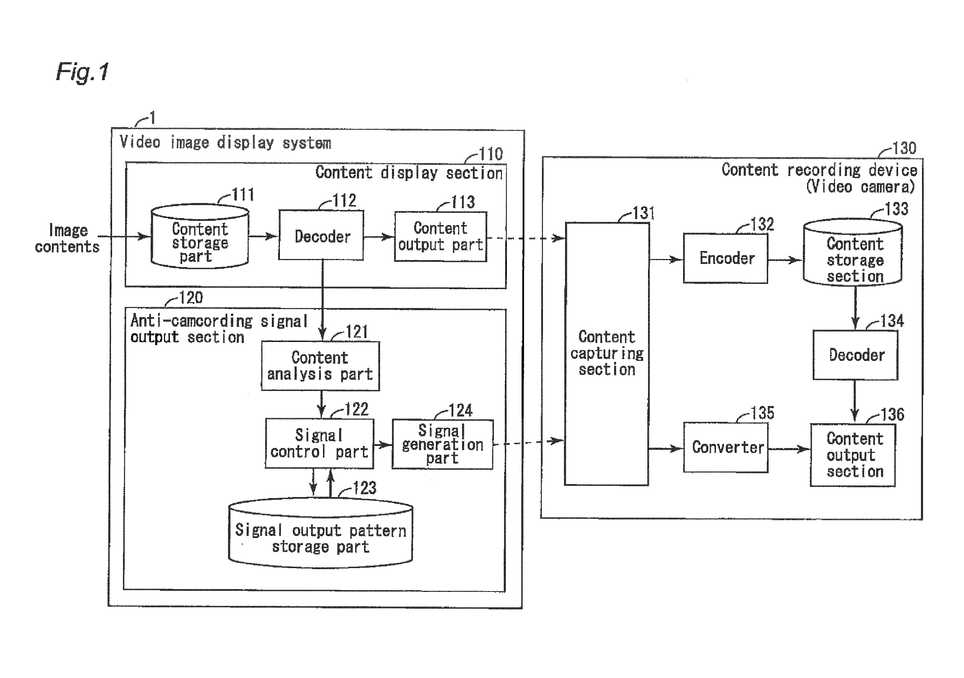

One embodiment of the present invention, realized based on the above-described technical ideas, is explained below, with reference to FIGS. 1 to 15. It should be noted that the embodiment explained herein is an exemplary embodiment of the present invention, and the present invention is not limited to this.

Explained herein as the present embodiment is a video image display system for screening video images such as movies in a movie theater or a play theater, based on digital image contents. With the video image display system of the present embodiment, in the case where digital image contents such as a movie screened in a theater are camcorded with a digital video camera or the like, the display quality of the thus camcorded digital image contents is degraded, whereby unauthorized distribution of illegally camcorded image contents can be prevented.

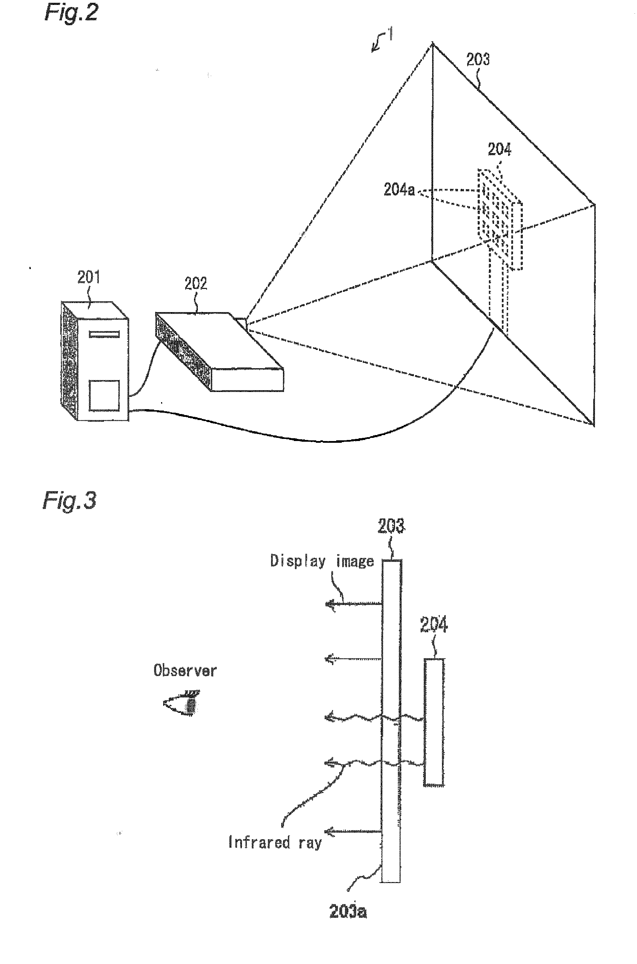

FIG. 2 shows a schematic configuration of a video image display system 1 according to the present embodiment. The video image display system 1 (video image display device) includes a video image reproducer 201, a projector 202 (image formation section), a screen 203 (video image display section, video image display sheet), and an infrared ray emitting unit 204 (light emission part, light emission control part).

The video image reproducer 201 temporarily stores image contents captured from outside, subjects the same to decoding processing for enabling image formation, and transmits digital video image signals obtained after the processing to the projector 202. As the configuration of the video image reproducer 201, a conventionally known configuration of a digital video image reproducing device can be applied. It should be noted that in the video image display system 1 as in the present embodiment, an image content to be reproduced by the video image reproducer 201 is usually an image content composed of a plurality of image frames (moving image contents), but the image content is not limited to that in the present invention. In other words, the image content may be a still image content.

The projector 202 forms display images with display elements incorporated therein, based on the digital video image signals transmitted from the video image reproducer 201. The images thus formed are projected onto the screen 203 with use of a projection optical system incorporated therein. As the configuration of the projector 202, a conventionally known configuration of a front-projection-type image display device can be applied.

The screen 203 displays images projected by the projector 202.

The infrared ray emitting unit 204 is provided on a back face side of the screen 203, and emits infrared light toward a front face side during a period while video images are being displayed on the screen 203. Here, the back face side of the screen 203 is a side opposite to a face on which images are displayed (a face that faces an observer or an auditorium), and the front face side of the screen 203 is a side on which images are displayed (side on which an observer is).

Here, the following description explains specific configurations of the screen 203 and the infrared ray emitting unit 204.

The screen 203 has a configuration identical to that of a conventional usual screen that displays video images in a movie theater. It should be noted that the screen 203 is a black shroud having a multiplicity of pores (pores having a diameter of about 2 to 3 mm), and having a white paint applied over a surface thereof, as is the case with a conventional usual screen, whereby an image display surface 203a (see FIG. 3) is formed.

The infrared ray emitting unit 204 is arranged on the back face side of the screen 203, as described above. This infrared ray emitting unit is provided with infrared LEDs 204a, as shown in FIG. 2. The infrared LEDs 204a are, for example, those which emit light in a wavelength band in the vicinities of a wavelength of 780 nm (hereinafter referred to as 780 nm LEDs), those which emit light in a wavelength band in the vicinities of a wavelength of 850 nm (hereinafter referred to as 850 nm LEDs), or the like.

With the above-described configuration, as shown in FIG. 3, infrared light emitted from the infrared ray emitting unit 204 passes through the pores provided in the screen 203, thereby being projected toward the observer (the auditorium).

It should be noted that light emitted from the infrared LEDs 204a contains light in a visible light range close to an infrared light range in some cases. Therefore, a visible light cut filter may be provided on a light emitting face of the infrared ray emitting unit 204. The visible light cut filter used herein may be a conventionally known one. Particularly in the case where the 780 nm LEDs are used, they are used desirably together with a visible light cut filter, since the 780 nm LEDs emit light in a wavelength band close to the visible light range. In this way, the infrared ray emitting unit for emitting infrared rays that are detected by a content recording device such as a video camera but are not recognized by eyes of people in the auditorium can be realized.

Next, the following description explains a processing flow for displaying video images, and a processing flow for degrading quality of illegally camcorded images, it the video image display system 1. FIG. 1 is a functional block diagram showing a configuration of a device that performs these processings.

As shown in FIG. 1, the video image display system 1 includes a content display section 110 for displaying video images on the screen 203, and an anti-camcording signal output section 120 for degrading display quality of illegally camcorded images. It should be noted that a video camera owned by a person who performs illegal camcording in a movie theater or the like is shown as a content recording device 130 in FIG. 1.

The content display section 110 includes a content storage part 111, a decoder 112, and a content output part 113.

The content storage part 111 temporarily stores image contents such as a movie captured from outside. In this case, the content storage part 111 is realized with a hard disk drive or a large-capacity memory. It should be noted that in the present invention, the content storage part is not limited to those described above, but may be something that functions as a buffer during the reproduction and display of image contents, such as a cache or a high-speed memory. The decoder 112 decodes image contents stored in the content storage part 111 into a format compatible with a display standard of the projector 202. The content output part 113 forms display images from the image contents (digital video image signals) thus decoded, and displays the same on the image display surface (image display region) 203a of the screes 203.

In the present embodiment, among the blocks of the content display section 110, the content storage part 111 and the decoder 112 are present in the video image reproducer 201. The content output part 113 is realized as the projector 202 and the screen 203.

For the content display section 110 described above, a configuration identical to that of a known video image display system can be used.

The anti-camcording signal output section 120 includes a content analysis part 121 (image analysis part), a signal control part 122 (light emission control part), a signal output pattern storage part 123 (light emission control part), and a signal generation part 124 (light emission part).

The content analysis part 121 analyzes a spatial feature amount and a temporal feature amount of an image content (digital video image signals) captured from the content display section 110. More specifically; as to each image content composed of a plurality of image frames, the content analysis part 121 analyzes brightness (gray level value) of each pixel. This makes it possible to obtain image information regarding a spatial feature amount and a temporal feature amount, that is, what level of brightness which region has at which time (which frame), in a series of video images. Therefore, it is possible to determine brightness of video images per unit area and per unit time by sampling images of a plurality of frames. It should be noted that digital video image signals transmitted to the content analysis part 121 are video image signals processed by the decoder 112.

The signal control part 122 controls a light emission intensity at the infrared ray emitting unit 204. Here, the control of the light emission intensity is carried out with reference to information stored in the signal output pattern storage part 123.

It should be noted that the signal output pattern storage part 123 stores an intensity of infrared light (anti-camcording signal) emitted by the signal generation part 124, a signal pattern thereof, etc. Besides, brightness per unit area in a video image during a certain set period, and a maximum light emission intensity (electric current value of an infrared LED) of the infrared ray emitting unit 204 at the time, are stored together with correspondence therebetween. This allows the signal control part 122 to control light emission states of the infrared LEDs in the signal generation part 124 while referring to the signal generation patterns stored in the signal output pattern storage part 123.

The signal generation part 124 varies the intensity of the output of infrared light as the anti-camcording signal, according to an instruction from the signal control part 122.

In the present embodiment, among the blocks in the anti-camcording signal output section 120, the following are present in the video image reproducer 201: the content analysis part 121, the signal control part 122, and the signal output pattern storage part 123. The signal generation part 124 is equivalent to the infrared ray emitting unit 204.

As described above, with the content analysis part 121, the signal control part 122, and the signal output pattern storage part 123 thus provided, it is possible to control the light emission intensity and the light emission pattern of infrared rays by the infrared ray emitting unit 204.

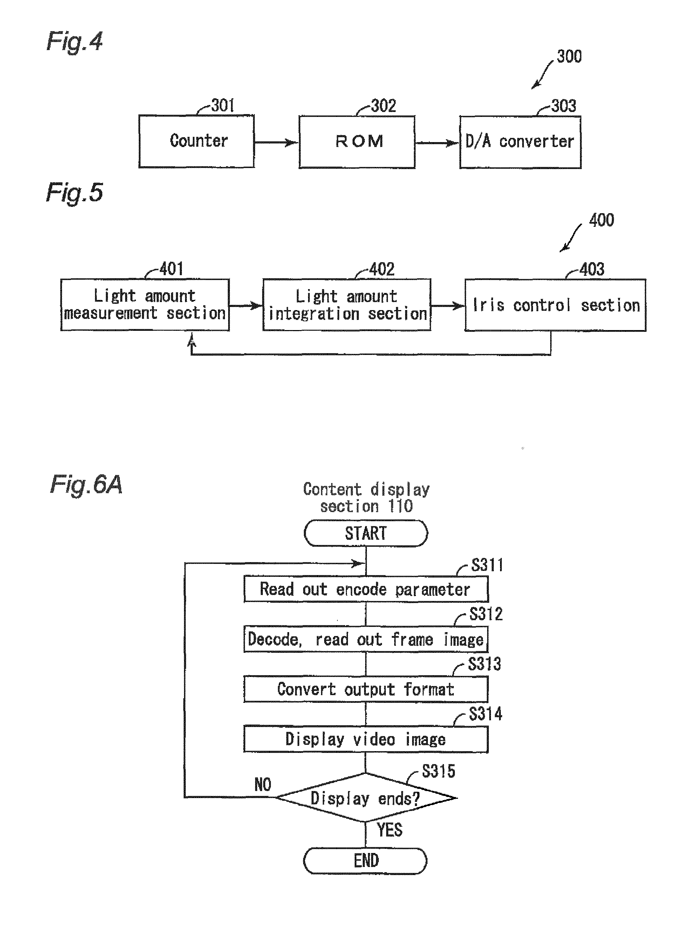

It should be noted that the present invention does not necessarily require variation of the light emission intensity and the light emission pattern in accordance with characteristics of image contents, and the light emission by the infrared ray emitting unit 204 may be controlled according to a predetermined light emission intensity and a predetermined light emission pattern. This makes it possible to reduce an amount of processing operations at the anti-camcording signal output section 120. In the case where the control of light emission is thus carried out in accordance with predetermined patterns, a light emission control part may be attached to the infrared ray emitting unit 204, and during a period while video images are displayed on the screen 203, infrared rays may be output at a predetermined light emission intensity and in a predetermined light emission pattern, irrespective of details of the image contents. Here, the signal generation part 124 may have a configuration in which a D/A converter is connected to output of a counter that counts up or down according to a clock signal input thereto, and the light emission state of the infrared LEDs is controlled linearly according to the output of the D/A converter, whereby the circuit configuration can be simplified. It should be noted that in a signal generation section 300 in the case of the configuration in which the light emission state of the infrared LEDs is controlled non-linearly, a ROM (read only memory) 302 that stores a lookup table defining the relationship between the counter value and the emission light intensity of the infrared LEDs may be connected to between a counter 301 and a D/A converter 303, as shown in FIG. 4.

The content recording device 130 is a recording device for recording contents that is used by a person who attempts to camcord video images displayed on the screen 203 (camcording person). The content recording device 130 can be realized with a conventionally known device such as a digital video camera or the like.

As shown in FIG. 1, the content recording device 130 includes a content capturing section 131 that captures images, an encoder 132 that encodes the captured content, a content storage section 133 that stores the encoded content, a decoder 134 that decodes the stored content into a format suitable for display, a converter 135 that converts the captured content into a format suitable for display, and a content output section 136 that displays or outputs the captured content. The content capturing section 131 includes a CCD or CMOS image sensor as light-receiving elements, and further includes a lens mechanism and an iris mechanism. Light entering the content recording device 130 is condensed by a lens, and after an amount of the like is controlled by the iris, the light reaches the light-receiving elements. The purpose for controlling the amount of light is to cause an appropriate amount of light to reach the light-receiving elements. If the amount of light is excessively large, video images become too bright, whereas if the amount of light is insufficient, the video images become too dark. The converter 135 is intended to directly display or output the content captured by the content capturing section 131, without storing the same.

The iris mechanism 400 has an auto-iris function, as shown in FIG. 5, and includes a light amount measurement section 401, a light amount integration section 402, and an iris control section 403. A measurement result of the light amount measurement section 401 based on the amount of light received by light-receiving elements is integrated by the light amount integration section 402 during a period of a time constant of the auto-iris control, and the iris control section 403 controls an iris opening degree based on the value as the integration result. Thereafter, in the state at this iris opening degree, the same action as described above is carried out. The above-described action is repeated, and the iris opening degree is controlled automatically. It should be noted that the light-receiving elements such as a CCD or CMOS image sensor also detect amounts of, not only light in a visible light range, but also light such as infrared light and ultraviolet light.

It should be noted that the description herein explains a mechanical iris having a variable iris opening degree, but an electronic iris may be used instead. An exemplary configuration of an electronic iris is an amplifier (preamplifier) provided between light-receiving elements and an A/D converter. With this exemplary configuration, the effect of adjusting the received light amount can be achieved by adjusting a gain of the amplifier. It should be noted that the following explanation utilizes an expression of "opening" an iris or "closing" an iris, assuming that the iris mechanism 400 is a mechanical iris. In the case where an electronic iris is used, however, the same effect as that of the opening of the iris in the case of the mechanical iris can be achieved by increasing the gain of the amplifier. The same effect as that of the closing of the iris in the case of the mechanical iris can be achieved by decreasing the gain of the amplifier.

The video image display system 1 of the present embodiment has the above-described configuration, thereby being capable of emitting infrared light together with video images from the image display surface 203a of the screen 203 toward an observer (see FIG. 3). Since eyes of humans do not recognize infrared light, video images containing infrared light, even if displayed on the screen, are recognized as if video images having no difference from the usual video images would be displayed. In contrast, the content recording device 130 such as a video camera used for illegal camcording has an infrared-light-detecting CCD or CMOS image sensor as light-receiving elements. Therefore, if camcording video images containing infrared light, the content recording device 130 consequently captures video images displayed on the screen, in an inappropriate iris-opened state.

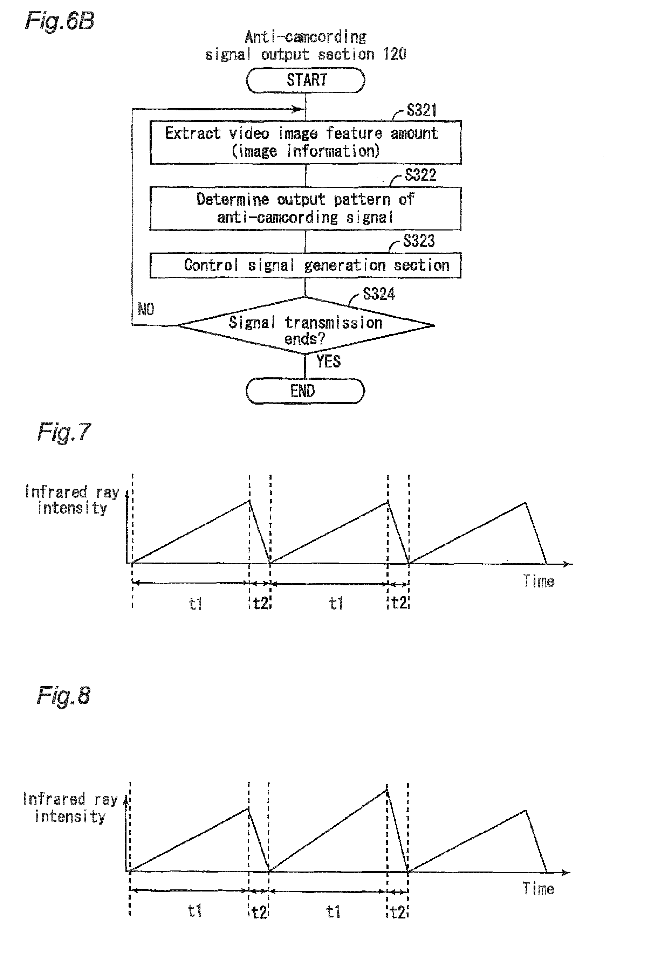

Next, the following description explains flows of video image processing and anti-camcording signal output processing in the video image display system 1, while referring to the flowcharts shown in FIGS. 6A and 6B.

First, the flow of the processing in the content display section 110 is explained with reference to FIG. 6A.

The content display section 110 reads out parameters upon encoding from an encoded image content stored in the content storage part 111 at Step S311. The image content from which parameters have been read out is sent to the decoder 112. The decoder 112 reads out a partial content for a predetermined time out of the content stored therein according to the parameters thus read out, decodes the content, and further, reads a frame image out of the decoded content (Step S312).

The frame image read out of the decoded content is transmitted to the content output part 113 (projector 202), and here, the content is converted into a display format that enables image formation in the projector (Step S313).

Subsequently, at Step S314, the content output part 113 (projector 202) displays the converted image content on the screen 203. Thereafter, at Step S315, the content display section 110 determines whether or not there is a display end instruction in a predetermined region of the image content. If there is no such instruction (if "NO" at S315), the flow goes back to Step S311, and the output of video images is continued. On the other hand, a display end instruction is detected (if "YES" at S315), the display of video images is ended.

The above-described flow is the flow of processing at the content display section 110.

Next, the following description explains the flow of processing at the anti-camcording signal output section 120, while referring to FIG. 6B. FIG. 6B is a flowchart that shows the flow of signal output processing performed by the anti-camcording signal output section 120 when an image content of a plurality of frames is displayed by the content display section 110. Here, a plurality of frames are equivalent to a time that is at least equal to or more than a time constant of the auto-iris control.

First, the content analysis part 121 in the anti-camcording signal output section 120 determines a feature amount of video data (image information) in the decoded image content transmitted from the decoder 112 (Step S321). In the present embodiment, the content analysis part 121 analyzes brightness (gray level value) of each pixel per frame regarding the image content composed of a plurality of image frames, and uses this brightness as the video image feature amount (image information).

The image information obtained at the content analysis part 121 is sent to the signal control part 122. The signal control part 122 determines an intensity and a light emission pattern (light emission waveform) of an anti-camcording signal that should be sent with respect to the transmitted image information, while referring to the signal output pattern storage part 123 (Step S322). Then, the signal control part 122 performs control of a light emission state of infrared light at the signal generation part 124 based on the determined signal output pattern (Step S323). In other words, the signal control part 122 controls the light emission intensity at the signal generation part 124 (infrared ray emitting unit 204) based on the image information obtained by the content analysis part 121.

Thereafter, at Step S324, the content analysis part 121 determines whether or not there is a display end instruction in a predetermined region of the image content. If there is no such instruction (if "NO" at S324), the flow goes back to Step S321, and the processing is continued. On the other hand, a display end instruction is detected (if "YES" at S324), the processing is ended.

Here, the following description explains methods for controlling an intensity and an emission pattern of an anti-camcording signal emitted by the signal generation part 124.

Regarding the intensity of the anti-camcording signal, for example, a method of determining an intensity of the anti-camcording signal (infrared light) based on brightness of video images displayed on the screen 203 can be used. For example, the maximum intensity of light emission by the infrared ray emitting unit 204 is preferably set, for example, to be greater than brightness per unit area of a video image displayed on the screen 203. More specifically, for example, it is possible to control the maximum light emission intensity of the infrared ray emitting unit 204 so that the intensity is at a level three times or more than the brightness per unit area of a video image displayed on the screen 203. Further, it is possible to select the optimal light emission pattern (light emission waveform) of the infrared ray emitting unit 204 based on variation of the brightness of video images displayed on the screen 203.

More specifically, light emission patterns, for example, as shown in FIGS. 7 to 15 may be stored in the signal output pattern storage part 123, so as to correspond to various video image contents having different levels of brightness of respective video images that are sampled and different cycles of brightness variation thereof. The vertical axes of these diagrams plot the infrared ray emission intensity and the horizontal axes of the same plot time.

The light emission pattern shown in FIG. 7 includes a time period t1 in which the infrared ray emission intensity linearly increases from the minimum value to the maximum value, and a time period 2 in which the infrared ray emission intensity linearly decreases from the maximum value to the minimum value. These time periods t1 and t2 are continuous to each other, whereby the infrared ray intensity forms a continuous, approximately triangular waveform. The length of the time period t1 is equal to or more than a time constant of the auto-iris control, and the length of the time period t2 is equal to or less than the time constant of the auto-iris control. The time period t1 is longer than the time period t2. Normally the time constant of the auto-iris control of a video camera is about 30 milliseconds to 5.0 seconds. In the case where the time constant is one second, the iris opening is determined based on an average of a light amount during one second. Therefore, during the time period t1, the infrared ray intensity slowly varies so that the auto-iris control follows the same. On the other hand, during the subsequent time period t2, the infrared ray intensity exhibits too abrupt change for the auto-iris control to follow. Such an abrupt change in the light emission intensity causes an inappropriately open iris state. Thus, the time period t1 while images with a quality at a watchable level can be obtained, and the time period t2 while images with a degraded quality are obtained, are continuous alternately from one to another. Therefore, even if video images are illegally camcorded, the illegally camcorded video images are made very hard to see. It should be noted that the maximum value of the infrared ray emission intensity (maximum value) may be set greater than the brightness per unit area of a video image displayed on the screen, that is, an image of a plurality of frames sampled, whereby the work on the auto-iris mechanism can be made more effective. It should be noted that the iris control is performed based on an integrated value (average value) of a light amount during a certain set period. Therefore, as compared with a case where the infrared ray emitting unit 204 is blinking at intervals of several seconds, that is, a case where the variation of the infrared ray intensity exhibits an approximately rectangular waveform, a greater integrated value of a light amount can be obtained in the present embodiment in which the variation of the infrared ray intensity exhibits series of an approximately triangular waveforms, as shown in FIG. 7. Therefore, the present embodiment achieves greater effects on the auto-iris mechanism.

The light emission pattern shown in FIG. 8 is a pattern identical to the pattern shown in FIG. 7 except that the maximum value of the approximately triangular waveform shown in FIG. 7 varies. In the light emission pattern shown in FIG. 8, the maximum value of the light emission intensity may be varied regularly, or alternatively, may be varied at random. Further alternatively, in the case where brightness per unit area of a video image displayed on the screen, that is, an image of a plurality of frames sampled, varies, the following configuration may be adopted: such variation is detected by the content analysis part 121, and the maximum value of the light emission intensity is controlled finely according to the detected variation. In this case, the work on the auto-iris mechanism can be made more effective.

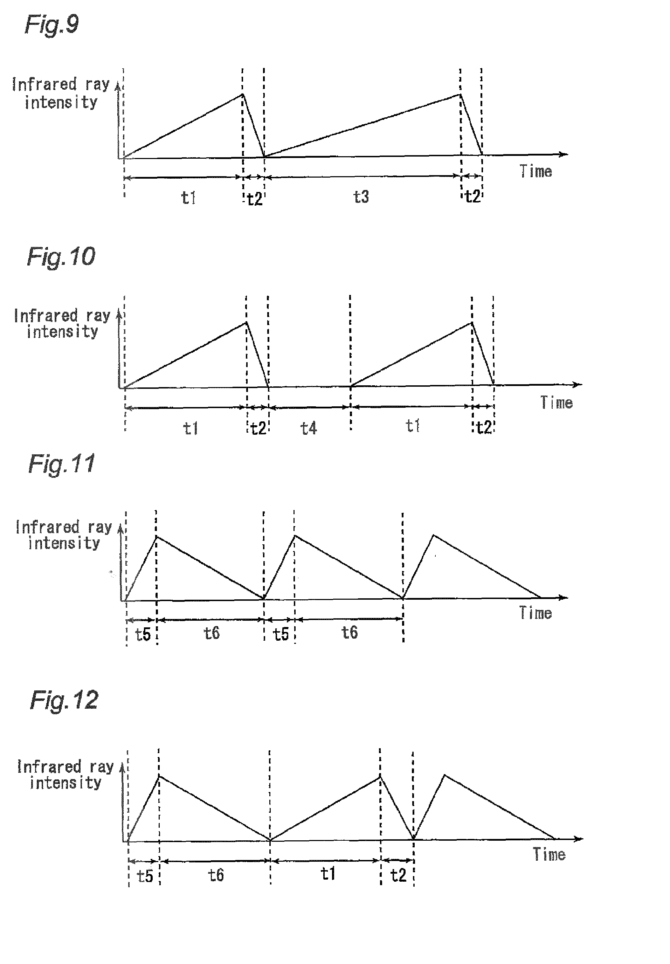

The light emission pattern shown in FIG. 9 is an exemplary light emission pattern in which the time periods of linear variation from the minimum value to the maximum value of the infrared ray emission intensity of FIG. 7 are non-uniform. In the example shown in FIG. 9, the time period t3 is longer than the time period t1. In the light emission pattern shown in FIG. 9, the length of the time period of the linear variation from the minimum value to the maximum value of the infrared ray emission intensity may be varied regularly, or alternatively, it may be varied at random. Further alternatively, in the case where brightness per unit area of a video image displayed on the screen, that is, an image of a plurality of frames sampled, varies, the following configuration may be adopted: such variation is detected by the content analysis part 121, and the length of the aforementioned period (cycle of the variation of the light emission intensity) is controlled finely according to the detected variation. With this configuration, the work on the auto-iris mechanism can be made more effective.

The light emission pattern shown in FIG. 10 is identical to the pattern shown in FIG. 7 except that the approximately triangular waves are thinned out of the waveform of FIG. 7, or alternatively, the approximately triangular waves are spaced further in the waveform of FIG. 7. In such a light emission pattern, an appropriately open iris state is maintained for a certain set period, and hence, there are certain set periods of time while normal video images can be seen. With this, illegally camcorded video images are still made hard for humans to see. During the time periods t1 and the time periods t2 of the approximately triangular waveform, the iris operates so as to close. On the other hand, during the subsequent time period t4 while the infrared ray emission intensity is zero, the iris operates so as to open. This results in that cyclic luminance variation is superposed on the illegally camcorded video images. Therefore, this causes flicker elements to be given thereto, thereby being particularly effective for prevention of illegal camcording of still images in which the brightness of video images does not vary.

The light emission pattern shown in FIG. 11 is a light emission pattern in which the infrared ray intensity variation of the approximately triangular waveform shown in FIG. 7 is reversed. In other words, the light emission pattern shown in FIG. 11 includes a time period t5 and a time period t6 alternately, the time period t5 being a time period in which the infrared ray emission intensity linearly increases from the minimum value to the maximum value, and the time period t6 being a time period in which the infrared ray emission intensity linearly decreases from the maximum value to the minimum value. The time period t5 has a length equal to or less than a time constant of the auto-iris control. The time period t6 has a length equal to or more than the time constant of the auto-iris control. The length of the time period t6 is greater than that of the time period t5. For example, in the case where the infrared ray intensity variation of the light emission pattern shown in FIG. 7 assumes the same tendency as that of the variation of video image brightness and they interfere each other, thereby decreasing the anti-camcording effect against illegally camcorded images, the light emission pattern shown in FIG. 11 may be selected.

The light emission pattern shown in FIG. 12 is a light emission pattern obtained by combining the approximately triangular waveform shown in FIG. 7 and the approximately triangular waveform shown in FIG. 11. In other words, the light emission pattern shown in FIG. 12 alternately includes the following approximately triangular waveforms: an approximately triangular waveform composed of a continuous series of the time period t5 in which the infrared ray emission intensity linearly increases from the minimum value to the maximum value and the time period t6 in which the infrared ray emission intensity linearly decreases from the maximum value to the minimum value; and an approximately triangular waveform, composed of a continuous series of the time period t1 in which the infrared ray emission intensity linearly increases from the minimum value to the maximum value, and the time period t2 in which the infrared ray emission intensity linearly decreases from the maximum value to the minimum value. For example, in the case where, with the repetition of the same approximately triangular waveform as in the light emission pattern shown in FIG. 7 or FIG. 11, the infrared ray intensity variation assumes the same tendency as that of the video image brightness variation and they interfere thereby decreasing the anti-camcording effect against illegally camcorded images, the light emission pattern shown in FIG. 12 may be selected.

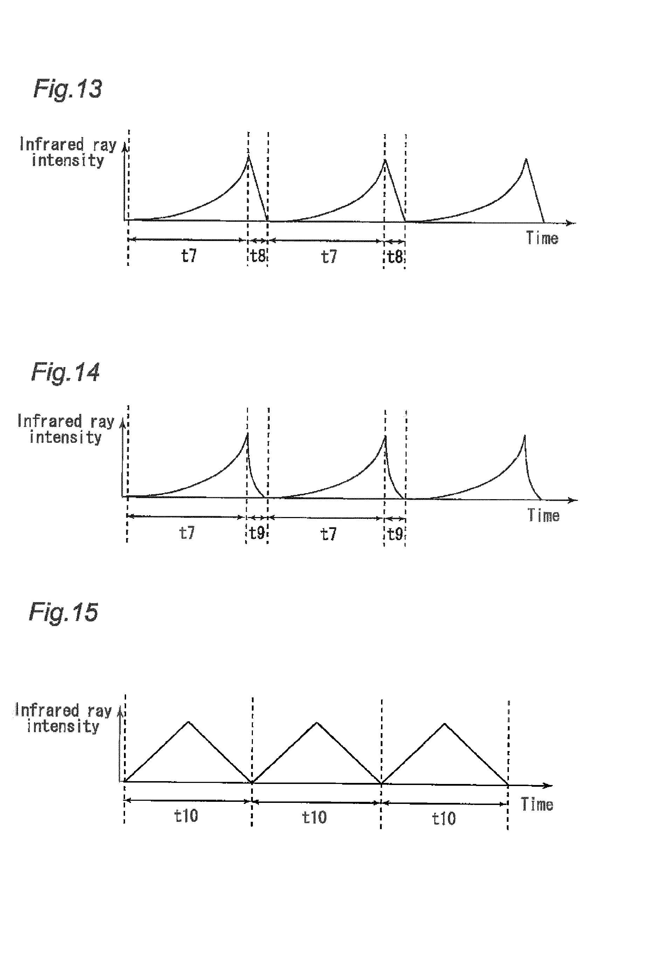

The light emission pattern shown in FIG. 13 is a pattern in which a time period t7 in which the infrared ray emission intensity non-linearly increases from the minimum value to the maximum value, and a time period t8 in which the infrared ray emission intensity linearly decreases from the maximum value to the minimum value are continuous to each other, thereby composing an approximately triangular waveform, and this approximately triangular waveform is repeated. The time period t7 has a length equal to or more than the time constant of the auto-iris control. The time period t8 has a length equal to or less than the time constant of the auto-iris control. The length of the time period t7 is greater than the length of the time period t8. I should be noted that the waveform during the time period t7 is non-linear, in which the variation of the infrared ray emission intensity can include an abrupt change that cannot be followed by the auto-iris control. This makes it possible to cause an inappropriately open iris state to be maintained always.

The light emission pattern shown in FIG. 14 is different from the light emission pattern shown in FIG. 13 in the following point: during a time period t9 in which the infrared ray emission intensity decreases from the maximum value to the minimum value, the variation of the infrared ray emission intensity is non-linear. Therefore, in the light emission pattern shown in FIG. 14, since the infrared light emission intensity always non-linearly varies, it is possible to more effectively generate a state in which the auto-iris control cannot follow the variation.

In the light emission pattern shown in FIG. 15, a time period t10 in which the infrared ray emission intensity linearly increases from the minimum value to the maximum value and linearly decreases from the maximum value to the minimum value has a length equal to or less than a time constant of the auto-iris control. The iris control is performed based on an integrated value (average value) of a light amount during a certain set period. Therefore, as compared with the case of an approximately rectangular waveform, such as a case where the infrared ray emitting unit 204 is blinking at intervals of several seconds, a greater integrated value of a light amount can be obtained in the present embodiment in which the approximately triangular waveforms serially appear, which results in greater effects on the auto-iris mechanism. Here, the length of the period in which the infrared ray emission intensity linearly increases from the minimum value to the maximum value and the length of the period in which it linearly decreases from the maximum value to the minimum value may be equal to, or different from, each other.

In the present embodiment, the infrared ray emitting unit 204 has a configuration of projecting infrared light to a partial portion at a center part of the image display surface of the screen 203. The present invention, however, is not limited to this configuration. In other words, the configuration may be such that the infrared ray emitting unit 204 projects infrared light over an entirety of the image display surface of the screen 203.

The infrared ray emitting unit 204 may be divided into a plurality of units that project infrared light to a plurality of different regions of the screen 203 partially. In the case where the infrared ray emitting unit 204 is composed of a plurality of units, the signal control part 122 (light emission control part) that controls the light emission intensity and the light emission pattern of infrared light may perform different controlling operations to the units, respectively. For example, the light emission intensity and the light emission pattern may be determined as to each light emission unit, based on an average gray level value of a display region irradiated with infrared light by each light emission unit. With this, the work on the auto-iris mechanism can be made more effective.

It should be noted that the video image display system 1 of the present embodiment uses the light emission unit having infrared LEDs as light sources, as the light emission part that emits light for a purpose other than a video image display purpose, but the present invention is not limited to this configuration. An infrared light source other than LEDs may be used as a light source that emits infrared light. Further, light for a purpose other than video image display is not limited to infrared rays having a wavelength of 780 nm or more. Ultraviolet rays having a waveform of 380 nm or less may be used instead. It should be noted that ultraviolet rays are harmful to human bodies, and therefore, in the case of the use in public facilities such as a movie theater, a light emission part that emits infrared light is preferably used.

In the above-described embodiment, the video image display device that projects images onto a screen by using a projector, but the embodiment of the present invention is not limited to a projection-type display device. For example, the present invention can be applied to a light-emitting-type display device such as a plasma display or an organic EL, a liquid crystal display device, etc. In such a case, the light emission part that emits light other than visible light may be provided at a position on the back face of the display, at which emitted light goes through the display toward the front face (observer's side) of the display, or alternatively, at a position on the front face of the display at which the light emission part does not hinder image display.

The present invention is not limited to the above-described embodiment, and may be modified variously within the scope shown by claims. Embodiments obtained by appropriate combinations of technical means and configurations of the embodiments disclosed herein also fall in the technical scope of the present invention.

### Industrial Applicability

The present invention is industrially applicable as a video image display device that is capable of degrading display quality of camcorded images in the case where the images displayed on a screen by the video image display device of the present invention are camcorded by a video camera or the like.

## Claims

1. A video image display device comprising:
an image formation section that generates a display image; and
a video image display section on which the image generated by the image formation section is displayed,
the video image display device further comprising:
a light emission part that emits light for a purpose other than a video image display purpose from a surface thereof on a side to the video image display section; and
a light emission control part that controls the light emission part so that a light emission intensity of the light for the purpose other than the video image display purpose varies during a period while video images are being displayed on the video image display section.

2. The video image display device according to claim 1, wherein, owing to the control by the light emission control part, during the period while video images are being displayed on the video image display section, there are two or more light emission intensity variation periods in which the light emission intensity of the light emission part weakly increases or strongly increases, and the two or more light emission intensity variation periods are continuous to each other.

3. The video image display device according to claim 2, wherein the two or more light emission intensity variation periods, which are continuous to each other, include a period having a length equal to or more than a time constant of auto-iris control of a camera, and a period having a length equal to or less than the time constant.

4. The video image display device according to claim 2, wherein the light emission intensity variation periods in which the light emission intensity weakly increases or strongly increases have a length of 30 milliseconds or more and 3.0 seconds or less each.

5. The video image display device according to claim 2, further comprising:
an image analysis part that analyzes brightness of a video image displayed on the video image display section,
wherein the light emission control part controls the light emission part based on the brightness of the video image analyzed by the image analysis part so that a maximum light emission intensity of the light emission part per unit area is greater than brightness of the video image per unit area.

6. The video image display device according to claim 5, wherein the light emission control part controls the light emission part so that the maximum light emission intensity of the light emission part per unit area is equal to or more than three times the brightness of the video image per unit area.

7. The video image display device according to claim 2, wherein the light emission control part controls the light emission part so that the light emission intensity linearly varies during at least a part of a period while the light emission intensity of the light emission part varies from a minimum value to a maximum value and a period while the light emission intensity varies from the maximum value to the minimum value.

8. The video image display device according to claim 2, wherein the light emission control part controls the light emission part so that the light emission intensity non-linearly varies during at least a part of a period while the light emission intensity of the light emission part varies from a minimum value to a maximum value and a period while the light emission intensity varies from the maximum value to the minimum value.

9. The video image display device according to claim 2, wherein the light emission control part controls the light emission part so that during a period while video images are displayed on the video image display section, a period while the light emission intensity of the light emission part does not vary is present, and the period has a length equal to or more than a time constant of auto-iris control of a camera.

10. The video image display device according to claim 2, wherein a sum of lengths of the two or more light emission intensity variation periods is equal to or less than a time constant of auto-iris control of a camera.

11. The video image display device according to claim 2, wherein a sum of the two or more light emission intensity variation periods is 30 milliseconds or more, and 3.0 seconds or less.

12. The video image display device according to any one of claims 1 to 11, wherein the light for the purpose other than the video image display purpose is infrared light.
